# EUROPÄISCHE PATENTSCHRIFT

(11) **EP 0 634 199 B1**
(45) Veröffentlichungstag und Bekanntmachung des Hinweises auf die Patenterteilung: **20.05.1998**
(21) Anmeldenummer: 94110388.9
(22) Anmeldetag: 04.07.1994
(51) Int. Cl.: B01D 29/11

(54) **Wasserfeinfilter mit einstellbarer Filter- und Rückspülfunktion**
Water filter comprising controllable filtering and backwashing elements
Filtre pour eau comportant des éléments contrôlables de filtration et de lavage à contre-courant

(30) Priorität: 05.07.1993 DE 9309988 U
(43) Veröffentlichungstag der Anmeldung: 18.01.1995
(73) Patentinhaber: PERMA TRADE WASSERTECHNIK GmbH, D-71229 Leonberg-Höfingen (DE)
(72) Erfinder: Sautter, Hans, D-70469 Stuttgart (DE)
(74) Vertreter: Kern, Wolfgang, Dipl.-Ing.

(56) Entgegenhaltungen:
- CH-A- 394 124
- CH-A- 675 546
- DE-A- 146 944
- US-A- 3 454 164

## Beschreibung

Die Erfindung betrifft einen Wasserfeinfilter mit einstellbarer Filter- und Rückspülfunktion, insbesondere für Hauswasser, mit einem in die Wasserrohrleitung einbaubaren Filtergehäuse, das wenigstens einen Filtereinsatz enthält, der durch auf seiner Oberfläche aufliegende Bürsten reinigbar ist, sowie ein von Hand betätigbares Spülventil, durch das der in den Filter eintretende Wasserstrom für den Spülvorgang steuerbar ist.

Es ist aus der CH-A-675 546 bekannt, bei der der Filtereinsatz in bezug auf die feststehenden Bürsten axial verschiebbar ausgebildet ist und die Reinigung des Siebs rein mechanisch erfolgt, wobei das Filtersieb bei seiner Verschiebung in Axialrichtung an den Bürsten vorbeidrehbar ist und gleichzeitig das am Boden der Filterglocke angeordnete Spülventil geöffnet wird, um die durch die Bürsten von der Filteroberfläche abgeschabten Filterrückstände wegzuspülen.

Der Reinigungseffekt hängt somit bei dieser Filtereinrichtung im wesentlichen davon ab, wie stark die Bürsten auf der Filteroberfläche aufliegen und dadurch die abgelagerten Filterrückstände erfassen und von der Oberfläche ablösen können. Dabei sitzen diese Rückstände zumindest teilweise auch noch zwischen den Maschen des Filters bzw. sie werden durch das axiale Vorbeischieben der Filteroberfläche an den ortsfesten Bürstenenden erst in die Maschen hineingedrückt, so daß das Filtergewebe im Laufe der Zeit immer mehr verstopft.

Bei dem aus der US-A-3 454 164 bekannten Wasserfilter erfolgt die Reinigung nicht mit Hilfe von Bürsten, sondern durch Erzeugung eines abrupten Druckabfalls innerhalb des Filtergehäuses, wodurch sich die Filterhülse unter der Wirkung des aus ihr heraus nach außen strömenden Wassers nach außen wölbt. Gleichzeitig wird ein zylindrisches Element über die Filterhülse geschoben, das die Filteroberfläche abschabt und somit von Filterrückständen befreien soll. Ein bürstenähnlicher Reinigungseffekt wird dadurch nicht erzielt. Vielmehr ist die Reinigungswirkung von der Höhe des Druckabfalls im Filtergehäuse abhängig und damit der Kraft, mit der das im Filter befindliche Wasser nach außen gedrückt wird.

Die Aufgabe der Erfindung besteht darin, die eingangs genannte Konstruktion so weiterzubilden, daß die aufgezeigten Nachteile nicht auftreten, insbesondere die gesamte Oberfläche des Filtergewebes des Filtereinsatzes sowohl für den Filtervorgang als auch für den Rückspülvorgang zur Verfügung stehen, wobei die Konstruktion darüber hinaus in fertigungstechnischer Hinsicht vereinfacht werden soll.

Diese Aufgabe wird erfindungsgemäß dadurch gelöst, daß der zylindrische Filtereinsatz an seinem oberen Ende einen Flansch aufweist, der ihn ortsunbeweglich im Filtergehäuse festhält, daß der Bürstenhalter, der sich zusammen mit den axial verlaufenden Bürsten koaxial um den Filtereinsatz erstreckt, an seinem oberen Ende von einer Scheibe abgedeckt ist, die an der Außenwand des Filtereinsatzes mit Hilfe eines Dichtungsrings abgedichtet ist und der einen Boden aufweist, der beim Filtervorgang das Spülventil geschlossen hält, wobei sich der Bürstenhalter in einer abgesenkten Stellung befindet und der in den Filter eintretende Wasserstrom durch das Siebgewebe des Filtereinsatzes hindurch in sein Inneres eintritt, und daß beim Rückspülvorgang durch Verschieben des Bürstenhalters in seine angehobene Stellung bei gleichzeitigem Drehen des Bürstenhalters das Spülventil geöffnet wird, wobei die Bürsten über die Oberfläche des Siebgewebes streifen und der in den Filter eintretende Wasserstrom oberhalb der Scheibe und des Dichtungsrings durch das Siebgewebe hindurch in den Filtereinsatzes eintritt und dort in einen aufwärts gerichteten, den Filter verlassenden Strom und einen abwärts gerichteten Strom aufgeteilt wird, der aus dem Inneren des Filtereinsatzes nach außen durch das Siebgewebe hindurchtritt und zusammen mit auf der Oberfläche des Siebgewebes abgelagerten Filterrückständen durch das Spülventil abströmt.

Gemäß einer vorteilhaften Ausgestaltung der Erfindung ist das untere Ende des Bürstenhalters mit einem durchbrochenen Boden versehen, der mit dem Ventilkolben des Spülventils verschraubt ist, auf den Kopf der Führungshülse des Spülventils aufsetzbar ist und zusammen mit dem Ventilkolben beim Öffnen und Schließen des Spülventils in bezug auf den stationären Filtereinsatz gemeinsam mit den Bürsten sowohl axial als auch drehbeweglich angeordnet ist.

Weitere vorteilhafte Ausgestaltungen der Erfindung sind den Unteransprüchen zu entnehmen.

Die Erfindung wird nachfolgend anhand des in der Zeichnung dargestellten Ausführungsbeispiels näher erläutert. In der Zeichnung zeigen:
- Fig. 1: eine längsgeschnittene Seitenansicht des Wasserfeinfilters im Filterzustand und
- Fig. 2: eine der Fig. 1 ähnliche längsgeschnittene Seitenansicht des Wasserfeinfilters im Rückspülzustand.

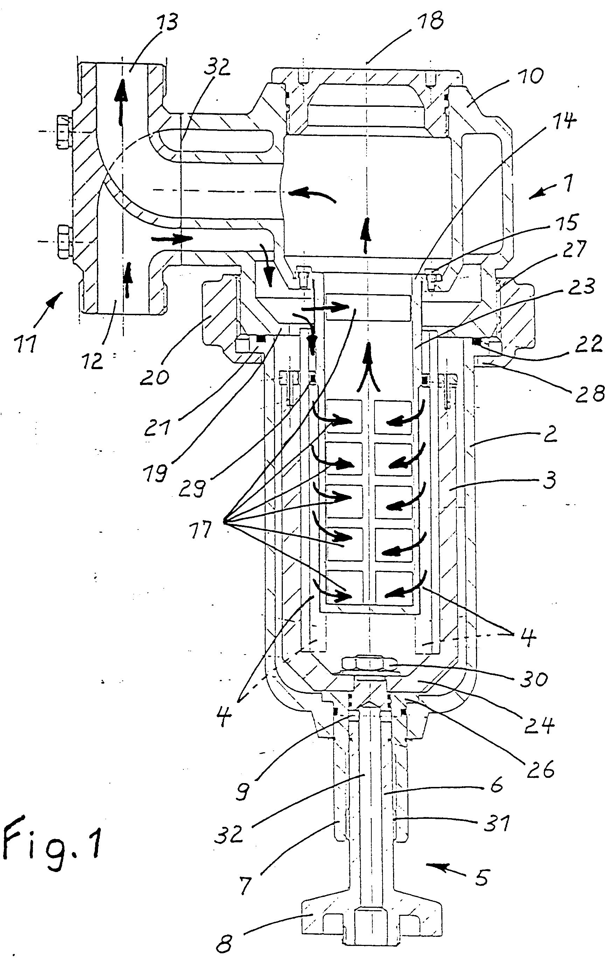

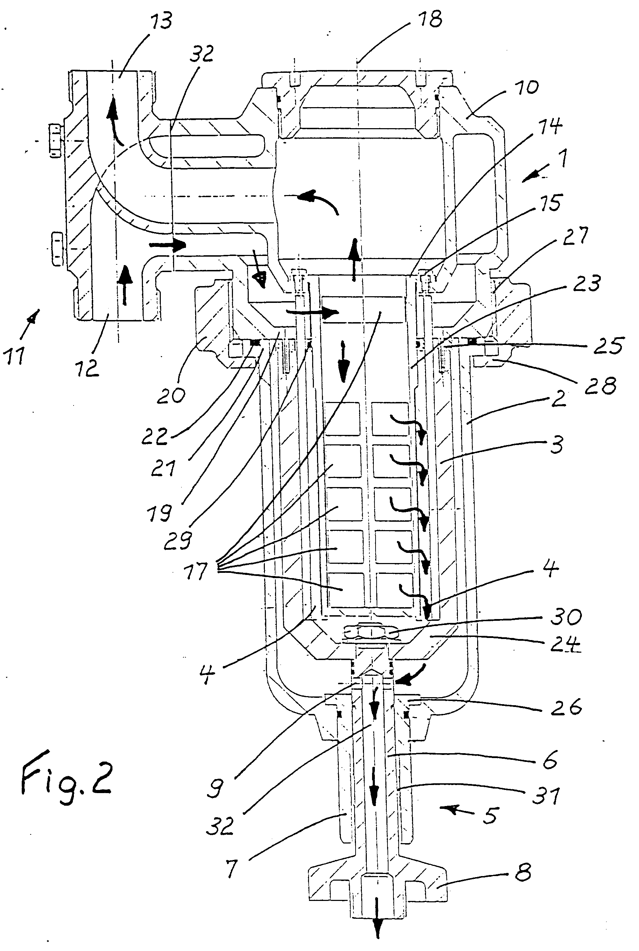

Der in den Figuren 1 und 2 dargestellte Wasserfeinfilter 1 mit einstellbarer Filter- und Rückspülfunktion dient insbesondere zur Reinigung von Hauswasser und wird zu diesem Zweck in die das Hauswasser zuführende Rohrleitung eingebaut. Es weist ein Filtergehäuse 2 auf, in dem sich ein Filtereinsatz 23 befindet, der mit Hilfe eines kopfseitigen Flansches 14 an dem Kopf 10 des Filters bei 15 angeschraubt ist. Das Filtergehäuse und der Kopf werden mit Hilfe einer Überwurfmutter 20, die auf einen Gewindeabschnitt 27 aufschraubbar ist, wasserdicht zusammengehalten. Zu diesem Zweck weist die Überwurfmutter einen Bodenflansch 28 auf, der unter einen kopfseitigen Flansch 21 des Filtergehäuses 2 greift und eine in der Oberfläche des Flansches 21 befindliche Ringdichtung 22 an die Unterseite des Kopfes 10 anpreßt.

Der Filtereinsatz 23 ist ein zylindrischer Körper und ist im Filtergehäuse 2 durch seine Schraubverbindung 15 mit Hilfe des Flansches 14 am Kopf 10 ortsunbeweglich angeordnet und von einem in bezug auf ihn entlang der Filtergehäuselängsachse 18 höhenverstellbaren Bürstenhalter 3 koaxial umgeben, der mit mehreren Streifenbürsten 4 versehen ist, die mit Abstand parallel verlaufen und auf dem Siebgewebe 17 der mit Durchbrüchen versehenen Zylinderwand des Filtereinsatzes anliegen.

Der Bürstenhalter 3 ist an seinem oberen Ende von einer Scheibe 25 abgedeckt, die an der Außenwand des Filtereinsatzes 23 mit Hilfe des Dichtungsrings 29 abgedichtet ist.

Das untere Ende des Bürstenhalters 3 ist mit einem durchbrochenen Boden 24 versehen, der mit dem Ventilkolben 6 des Spülventils 5 verschraubt ist, wie bei 30 ersichtlich. Dieser Boden sitzt auf dem Kopf 26 der Führungshülse 7 für den Ventilkolben 6 auf und wird zusammen mit dem Ventilkolben beim Öffnen und Schließen des Spülventils in bezug auf den stationären Filtereinsatz 23 gemeinsam mit den Streifenbürsten 4 axial und radial bewegt. Die Bewegungszustände des Ventilkolbens 6 entsprechen dem Filtervorgang, der in Fig. 1 dargestellt ist und dem Rückspülvorgang, der in Fig. 2 dargestellt ist. Beim Filtervorgang ist das Spülventil 5 geschlossen, wobei sich der Bürstenhalter 3 in der abgesenkten Stellung befindet und das in den Wasserfeinfilter 1 eintretende Wasser, wie aus der Richtung der in Fig. 1 eingezeichneten Pfeile hervorgeht, durch das Siebgewebe 17 des Filtereinsatzes 23 hindurch in sein Inneres eintreten läßt.

Beim Rückspülvorgang hingegen, der in Fig. 2 dargestellt ist, ist das Spülventil 5 geöffnet, wobei sich der Filtereinsatz 23 in der angehobenen Stellung befindet und das in den Wasserfeinfilter 1 eintretende Wasser wenigstens teilweise aus dem Inneren des Filtereinsatzes 23 durch dessen Siebgewebe hindurch nach außen tritt und durch das Spülventil abströmt.

Betätigt wird das Spülventil 5 mit Hilfe des Handgriffs 8, der am unteren Ende des Ventilkolbens 6 angebracht ist, welcher bei 31 mit der Führungshülse 7 über ein Schraubgewinde in Verbindung steht. Durch Drehen des Handgriffs 8 wird also der Bürstenhalter 3 zusammen mit den an ihm angebrachten Streifenbürsten ebenfalls gedreht und dabei axial verschoben, so daß die Streifenbürsten über die Oberfläche des Siebgewebes 17 streichen und die auf dieser Oberfläche abgelagerten Fremdstoffe, die der in den Filter eintretende Wasserstrom mit führt,beispielsweise Sande, wegwischt, wobei dann beim Rückspülvorgang gleichzeitig das aus dem Inneren des Filtereinsatzes 23 durch das Siebgewebe 17 nach außen tretende Wasser diese Fremdstoffe wegschwemmt, so daß diese zusammen mit dem Wasser durch die Querbohrung 9 und Axialbohrung 32 im Ventilkolben 6, wie aus Fig. 2 ersichtlich, abgeführt werden.

Das Filtergehäuse 2, das aus einem durchsichtigen Material, beispielsweise Plexiglas besteht, und an seinem unteren Ende die Führungshülse 7 des Spülventils 5 aufnimmt und an seinem oberen, dem Kopf 10 zugewandten Ende durch den Ringflansch 21 an dem an letzterem anliegenden Ringflansch 19 des Kopfes mit Hilfe der Überwurfmutter 20 mit dem Kopf wasserdicht verschraubt ist, läßt sich durch Lösen der Überwurfmutter 20 leicht vom Kopf entfernen, so daß der Filtereinsatz 23 sowie der Bürstenhalter 3 herausgenommen werden können.

An dem Kopf 10 ist seitlich ein Kopfstück 11 mit Dichtung 32 angebracht, das den Wasserzulauf 12 und Wasserablauf 13 enthält, die beide in Axialrichtung des Filtergehäuses 2 in das Kopfstück eintreten und in ihm um etwa 90° in Richtung auf den Kopf 10 und radial zu diesem umgelenkt sind. Dadurch ergeben sich die beiden parallelen Wasserströme für den Zulauf des zu filternden und den Ablauf des gefilterten Wassers unter Zwischenschaltung des Filtereinsatzes 23.

Der obige Aufbau des Wasserfeinfilters und seine Funktionsweise haben zur Folge, daß auch beim Rückspülvorgang, wie aus Fig. 2 ersichtlich, ein Teil des durch den Zulauf 12 zugeströmten Wassers gefiltert in den angeschlossenen Wasserablauf 13 gelangt, während ein anderer Teil als Spülwasser zusammen mit den ausgefilterten Fremdstoffen durch das Rückspülventil abfließt. Dies bedeutet, daß die Hauswasserversorgung während des Rückspülvorgangs nicht unterbrochen wird.

## Patentansprüche

1. Wasserfeinfilter mit einstellbarer Filter- und Rückspülfunktion, insbesondere für Hauswasser, mit einem in die Wasserrohrleitung einbaubaren Filtergehäuse, das einen zylindrischen Filtereinsatz enthält, der durch auf seiner Oberfläche aufliegende Bürsten reinigbar ist, die an einem den Filtereinsatz umgebenden Bürstenhalter angeordnet sind, sowie mit einem von Hand betätigbaren Spülventil, durch das der in den Filter eintretende Wasserstrom für den Rückspülvorgang steuerbar ist, **dadurch gekennzeichnet**, daß der zylindrische Filtereinsatz (23) an seinem oberen Ende einen Flansch (14) aufweist, der ihn ortsunbeweglich im Filtergehäuse (2) festhält, daß der Bürstenhalter (3), der sich zusammen mit den axial verlaufenden Bürsten (4) koaxial um den Filtereinsatz (23) erstreckt, an seinem oberen Ende von einer Scheibe (25) abgedeckt ist, die an der Außenwand des Filtereinsatzes (23) mit Hilfe eines Dichtungsrings (29) abgedichtet ist und der einen Boden (24) aufweist, der beim Filtervorgang das Spülventil (5) geschlossen hält, wobei sich der Bürstenhalter (3) in einer abgesenkten Stellung befindet und der in den Filter eintretende Wasserstrom durch das Siebgewebe (17) des Filtereinsatzes (23) hindurch in sein Inneres eintritt, und daß beim Rückspülvorgang durch Verschieben des Bürstenhalters (3) in seine angehobene Stellung bei gleichzeitigem Drehen des Bürstenhalters das Spülventil (5) geöffnet wird, wobei die Bürsten (4) über die Oberfläche des Siebgewebes (17) streifen und der in den Filter eintretende Wasserstrom oberhalb der Scheibe (25) und des Dichtungsrings (29) durch das Siebgewebe (17) hindurch in den Filtereinsatzes (23) eintritt und dort in einen aufwärts gerichteten, den Filter verlassenden Strom und einen abwärts gerichteten Strom aufgeteilt wird, der aus dem Inneren des Filtereinsatzes (23) nach außen durch das Siebgewebe (17) hindurchtritt und zusammen mit auf der Oberfläche des Siebgewebes abgelagerten Filterrückständen durch das Spülventil abströmt.

2. Wasserfeinfilter nach Anspruch 1, **dadurch gekennzeichnet,** daß das untere Ende des Bürstenhalters (3) mit einem durchbrochenen Boden (24) versehen ist, der mit dem Ventilkolben (6) des Spülventils (5) verschraubt ist, auf den Kopf (26) der Führungshülse (7) des Spülventils aufsetzbar ist und zusammen mit dem Ventilkolben beim Öffnen und Schließen des Spülventils in bezug auf den stationären Filtereinsatz (23) gemeinsam mit den Bürsten (4) axial sowohl als auch drehbeweglich angeordnet ist.

3. Wasserfeinfilter nach einem der Ansprüche 1 - 2, **dadurch gekennzeichnet**, daß das Filtergehäuse (3), das aus einem durchsichtigen Material besteht, an seinem unteren Ende die Führungshülse (7) für das Spülventil (5) aufnimmt und an seinem oberen, dem Kopf (10) des Wasserfeinfilters zugewandten Ende einen Ringflansch (21) aufweist, der mit Hilfe einer Überwurfmutter (20) auf den Kopf (10) wasserdicht aufschraubbar ist.

4. Wasserfeinfilter nach einem der Ansprüche 1 - 3, **dadurch gekennzeichnet,** daß seitlich an den Kopf (10) ein Kopfstück (11) für den Wasserzulauf (12) und Wasserablauf (13) angeschlossen ist und daß der Wasserzulaufund der Wasserablauf (13) in Axialrichtung des Filtergehäuses (2) in das Kopfstück (11) eintreten und in ihm um etwa 90° in Richtung auf den Kopf (10) und radial zu diesem umgelenkt sind.

## Claims

1. Water-microfiltering device comprising controllable filtering and backwashing elements, especially for household purposes, provided with a filter housing installable into the water pipe, having a cylindrical filter insert which can be cleaned by brushes contacting its surface and being connected to a brush holder surrounding the filter insert, and further provided with a hand operated washing valve, by which the water stream entering the filter can be controlled for the backwashing operation, **characterized in that** the cylindrical filter insert (23) is provided at its upper end with a flansch (14) holding it fixed and stationary within in the filter housing (2), that the brush holder (3), extending together with the axially extending brushes (4) coaxially to the filter insert (23), is covered at its upper end by a disk (25), which is sealed against the outer wall of the filter insert (23) by means of a sealing ring (29), which brush holder is provided with a bottom (24) holding the washing valve (5) in closed condition during the filtering procedure during which the brush holder is located in a lowered position, wherein the water stream enters the filter through the screen web (17) of the filter insert (23) into the interior thereof, and that during the backwashing operation the washing valve (5) is opened by shifting the brush holder (3) to its lifted position rotating simultaneously the brush holder, wherein the brushes (4) are contacting the surface of the screen web (17) and the water stream entering the filter enters above the disk (25) and the sealing ring (29) through the screen web (17) the filter insert (23) and is divided there in an upwardly directed stream leaving the filter and a downwardly directed stream leaving the interior of the filter insert (23) through the screen web in outwardly direction through the washing valve together with the filtering residue deposited on the screen web.

2. Water-microfiltering device according to claim 1, **characterized in that** the lower end of the brush holder (3) is proved with a perforated bottom (24) screwed onto the valve piston (6) of the washing valve (5) positionable onto the head (26) of the guiding sleeve (7) of the washing valve, which bottom is together with the valve piston during opening and closing the washing valve axially as well as rotatably moveable together with the brushes (4) arranged with respect to the stationary filter insert (23).

3. Water-microfiltering device according to one of the claims 1 to 2, **characterized in that** the filter housing (3) consisting of a transparent material and receiving at its lower end the guiding sleeve (7) of the washing valve (5) and at its upper end opposite to the head (10) of the water-microfiltering device an annular flansch (21) which can be screwed by means of a nut (20) onto the head (10) in a water tight manner.

4. Water-microfiltering device according to one of the claims 1 to 3, **characterized in that** a head piece (11) is laterally connected to the head (10) for the water input (12) and water output (13) and that the water input and the water output (13) are entering in axial diretion into the filter housing (2) and are turned around within said housing about 90° in direction to the head (10) and radially thereto.

## Revendications

1. Filtre fin pour eau comportant des éléments réglables de filtration et de lavage à contre-courant, destiné en particulier à l'eau domestique, comprenant un boîtier de filtre encastrable dans la conduite d'eau, qui contient une cartouche filtrante cylindrique susceptible d'être nettoyée par des brosses, reposant sur sa surface, qui sont disposées sur un support de brosses entourant la cartouche filtrante, et comprenant, en outre, une soupape de vidange actionnable à la main, au moyen de laquelle le flux d'eau pénétrant dans le filtre est susceptible d'être commandé pour l'opération de lavage à contre-courant, caractérisé en ce que la cartouche filtrante (23) cylindrique présente, sur son extrémité supérieure, une bride (14) qui la maintient immobile dans le boîtier de filtre (2), en ce que le support de brosses (3) qui s'étend, avec les brosses (4) disposées axialement, coaxialement autour de la cartouche filtrante (23), est recouvert, à son extrémité supérieure, par une plaque (25), qui est rendue étanche, au niveau de la paroi externe de la cartouche filtrante (23), au moyen d'une bague d'étanchéité (29), support de brosses qui présente un fond (24) qui maintient fermée la soupape de vidange (5) lors de l'opération de filtrage, le support de brosses (3) se trouvant en position abaissée, et le flux d'eau pénétrant dans le filtre s'introduisant à l'intérieur de lui, en traversant la gaze filtrante (17) de la cartouche filtrante (23), et en ce qu'au cours de l'opération de lavage à contre-courant, par déplacement du support de brosses (3) dans une position levée, tout en tournant simultanément le support de brosses, la soupape de vidange (5) est ouverte, les brosses (4) passant sur la surface de la gaze filtrante (17), et le flux d'eau pénétrant dans le filtre, en passant au-dessus de la plaque (25) et de la bague d'étanchéité (29), s'introduisant, à travers la gaze filtrante (17), dans la cartouche filtrante (23) et s'y divisant en un flux orienté vers le haut, quittant le filtre et en un flux orienté vers le bas, provenant de l'intérieur de la cartouche filtrante (23) et traversant la gaze filtrante (17) en direction de l'extérieur, et s'échappant par la soupape de vidange en même temps que les résidus de filtration déposés à la surface de la gaze filtrante (17).

2. Filtre fin pour eau selon la revendication 1, caractérisé en ce que l'extrémité inférieure du support de brosses (3) est pourvue d'un fond (24) percé, qui est vissé avec le piston (6) de la soupape de vidange (5), qui est susceptible d'être monté sur la tête (26) du manchon de guidage (7) de la soupape de vidange et qui, avec le piston, est monté mobile, aussi bien axialement qu'en rotation, en même temps que les brosses, par rapport à la cartouche filtrante (23) fixe, lors de l'ouverture et de la fermeture de la soupape de vidange.

3. Filtre fin pour eau selon l'une des revendications 1-2, caractérisé en ce que le boîtier de filtre (3), constitué en matériau transparent, loge, à son extrémité inférieure, le manchon de guidage (7) destiné à la soupape de vidange (5), et présente, à son extrémité supérieure, orientée en direction de la tête (10) du filtre fin pour eau, une bride annulaire (21) qui est susceptible d'être vissée sur la tête (10), de façon étanche à l'eau, au moyen d'un écrou d'accouplement (20).

4. Filtre fin pour eau selon l'une des revendications 1-3, caractérisé en ce que, sur le côté de la tête (10), est branché un raccord renflé (11) pour l'arrivée d'eau (12) et l'évacuation de l'eau (13), et en ce que les flux d'arrivée d'eau et d'évacuation de l'eau (13) pénètrent dans le raccord renflé (11), dans la direction axiale du boîtier de filtre (2), et sont déviés d'environ 90°, à l'intérieur du raccord renflé, en direction de la tête (10) et radialement par rapport à celle-ci.
